# EUROPEAN PATENT APPLICATION

(11) **EP 1 125 623 A1**
(43) Date of publication of application: **22.08.2001**
(21) Application number: 00119469.5
(22) Date of filing: 15.09.2000
(51) Int. Cl.: B01D 53/047, B01D 53/053, C01B 13/02

(54) **Method for separation of gaseous mixtures of oxygen, argon and nitrogen**

(30) Priority: 18.02.2000 PL 33853100
(71) Applicant: INSTYTUT CIEZKIEJ SYNTEZY ORGANICZNEJ "BLACHOWNIA", 47-225 Kedzierzyn-Kozle (PL); Kopalnia Wegla Brunatnego, " Konin" w Kleczewie Spolka Akcyjna, 62-540 Kleczew (PL)
(72) Inventor: Budner, Zbigniew, Kedzierzyn-Kozle (PL); Kolodziejski, Andrzej, Konin (PL); Kruszynski, Zbigniew, Slesin (PL); Dula, Janusz, Kedzierzyn-Kozle (PL)
(74) Representative: Patentanwälte Zellentin & Partner

(57) **Abstract**

The method according to the invention consists in separation of gaseous mixture of oxygen, argon and nitrogen by a method of variable-pressure adsorption PSA on molecular carbon or zeolite sieves, selectively adsorbing oxygen from argon and nitrogen, by selective adsorption of oxygen at increasing pressure with simultaneous carrying of argon fraction away to the buffer tank, rinsing of argon out with pure oxygen under elevated pressure, higher than the final pressure of filling, with simultaneous carrying of argon away through the buffer tank and desorption of pure oxygen at the pressure near to the atmospheric pressure.

## Description

The object of the invention is a method for separation of gaseous mixtures of oxygen, argon and nitrogen by variable pressure adsorption on molecular carbon or zeolite sieves in order to produce high purity oxygen.

Development of technologies of variable pressure adsorption, commonly called PSA, allows effective oxygen production in a small scale. The known PSA technologies of air separation on molecular zeolite sieves allow to produce oxygen of the purity at most 95.5% of O₂ by volume and the remaining impurity is then only argon. Generally in oxygen generators, where air separation is run on molecular zeolite sieves of NaX, CaX or CaA type, there is obtained oxygen of the purity 95.0 ÷ 95.3% by volume of O₂, containing 4.5% of argon and 0.2 - 0.5% of nitrogen by volume.

Oxygen of such purity can be used in the majority of oxygen processes but it cannot be used for cutting steel, steel sheets of high thickness. It cannot be used for automatic steel sheet cutting. For such purposes it is possible to use oxygen of the purity at least 99.8 ÷ 99.9% by volume of O₂, preferably of the purity 99.99% by volume of O₂.

Oxygen of high purity, above 99.2% by volume of O₂ can be produced of oxygen of the purity not lower than 95.0% by volume of O₂ containing 0.5% by volume of N₂ and 4.5% by volume of Ar, preferably of oxygen of the purity 95.5% by volume of O₂ polluted only with argon, produced by air separation on molecular zeolite sieves, applying known PSA technologies of air separation and next by separation of oxygen of such purity by a method of variable pressure adsorption on molecular carbon or zeolite sieves, selectively adsorbing oxygen from argon and nitrogen in a kineticly selective process of variable pressure adsorption. Up to now by this method it has been possible to produce oxygen of the purity higher than 99.7% by volume of O₂.

According to the US patent no. 4.190.424, the method for high purity oxygen production consists in the fact that oxygen containing typically 90.0% by volume of O₂, 4,5% by volume of Ar and 5.5% by volume of N₂, obtained in the PSA process on molecular zeolite sieves, is exposed to purification up to the purity of 99.7% by volume of O₂ in the second PSA stage on molecular carbon sieves by selective adsorption of oxygen from nitrogen and argon. There is used a molecular carbon sieve of the pore size 3 - 10 x 10⁻¹ nm. According to the US patent no.4.813.979 high purity oxygen is obtained from oxygen 95.0% by volume in the PSA process on a molecular carbon sieve selectively adsorbing argon. The process of oxygen purification consists in the fact that in a double-adsober installation, the carbon bed is filled with oxygen and next oxygen is let under elevated pressure through the bed and purified oxygen is received at the other end when in the second adsorber there is run desorption of adsorbed argon by counter-current pressure reduction. The adsorbers work alternatively in cycles lasting 3 - 9 seconds. The solution can be applied for purification of small oxygen streams, for instance for medical purposes.

According to the US patent no. 5.226.933, for oxygen purification there is proposed application of silver mordenite Ag (18)M selectively adsorbing argon from oxygen. From oxygen containing 95.0% by volume of O₂ and 5% by volume of Ar there is obtained oxygen of the purity 99.7% by volume. The process requires high pressure and gives low efficiency of oxygen production.

According to the European application 0132239, the method for high purity oxygen production consists in selective adsorption of oxygen from argon in a kineticly selective process on natural or modified clinoptylolites.

The US patent no. 5.137.549 presents a method for high purity oxygen production, which is the nearest to the solution presented in this specification. The clue of the proposed method for high purity oxygen production consists in the fact that oxygen of the purity 95.5% by volume polluted only with argon is obtained in the first PSA stage on molecular zeolite sieves. Next oxygen is brought to a buffer tank, wherefrom it is taken to the second PSA stage, containing two adsorbers filled with molecular carbon sieve selectively adsorbing oxygen from argon. The process of oxygen purification is run in the following technological operations:
- filling; to the adsorber there is supplied oxygen of the purity 95.5% by volume, the pressure in the adsorber is elevated to the pressure of adsorption,
- adsorption; through the carbon bed there is let oxygen of the purity 95.5% by volume, from the other end there is carried away gas enriched with unadsorbed argon,
- cocurrent pressure reduction and rinsing out; to the adsorber there is supplied compressed purified oxygen of the purity 99.2% by volume, obtained in the desorption phase, by means of which there is rinsed out oxygen enriched with argon, contained in the sorbent free space. The stream of rinsed oxygen is directed in cocurrent to the second adsorber, due to which the pressure in the second adsorber grows to the intermediate, and the pressure in the first adsorber is reduced,
- counter-current desorption; from the adsorber there is carried out pure oxygen desorbing from the molecular carbon sieve.

Oxygen is compressed and partially recycled to the operation of rinsing out. The process is run alternatively in two adsorbers. When in one adsorber there are run operations of filling and adsorption, in the second adsorber oxygen desorption takes place.

The described methods for separation of gaseous mixtures of oxygen, argon and nitrogen on molecular carbon sieves or molecular zeolite sieves by the method of variable pressure adsorption PSA in a kineticly selective PSA process do not allow to produce oxygen of the purity higher than 99.7% by volume.

The PSA process according to the American patent no. 5.137.549 allows to obtain oxygen of the purity typically equal to 99.2% ÷ 99.3% by volume of O₂, at most 99.5% by volume of O₂ with relatively low efficiency of oxygen yield. Such oxygen purity is not satisfactory for automatic waste free cutting of large thickness steel sheets.

The purpose of this invention was elaboration of a method for production of oxygen of the purity above 99.7%.

Unexpectedly it has been found out that joining the filling operation AR1, in which polluted oxygen is supplied to an adsorber with simultaneous carrying away of argon fraction from the other end of the adsorber to a buffer tank causes quick carrying away of argon contained in the final sorbent layers outside the sorbent zone, which reduces the time stay and contact with the sorbent, due to which the quantity of adsorbed argon is reduced and in consequence the purity of obtained oxygen increases. Unexpectedly it has been also found that supplying pure oxygen to the operation of filling with pure oxygen AR2 in cocurrent to the gas flow in the operation AR1 and under the pressure higher than the final pressure in the operation AR1 and simultaneous carrying away of argon fraction from the other end of the adsorber to the buffer tank causes rinsing out of argon adsorbed in the sorbent and after short time of contact with the sorbent - rinsing of argon out from the buffer tank, which gives further improvement of obtained oxygen purity. It has been also found unexpectedly that supplying pure oxygen to the adsorber in the operation of rinsing with pure oxygen R, in cocurrent to the gas flow in the operation AR1, but at the pressure higher than the final pressure in the operation AR1 and simultaneous carrying away of argon to the buffer tank and carrying away of the argon fraction from the buffer tank causes further rinsing of adsorbed argon out of the sorbent and taking it outside the sorbent zone and from the installation in an oxygen stream in the form of the argon fraction. It has been also found out that in the operations of pressure reduction E1 and pressure elevation 1E simultaneously proceeding in two adsorbers it is not necessary to equalize pressures between the joined adsorbers but the pressure in the adsorber should be reduced only to the level in which desorbing oxygen rinses out the argon residue contained in the free sorbent space.

Joining together in sequence the operations AR1, AR2 and R with continuous carrying away the argon fraction to the buffer tank and further carrying away the argon residue from the operation of pressure reduction E1 to the second adsorber causes that before the desorption is started, in the sorbent there is adsorbed actually pure oxygen and in the free space there is also pure oxygen. Eventually in the operation of desorption from the adsorber there is desorbed pure oxygen slightly polluted with argon and the losses of oxygen in the argon fraction are small.

The clue of the invention concerning kineticly selective process of variable pressure adsorption of separation of gaseous mixtures containing oxygen, argon and nitrogen on molecular carbon or zeolite sieves consists in the fact that the process is run in an installation including at least two adsorbers 1A and 1B and a buffer tank of argon fraction and the complete PSA cycle includes the following technological operations proceeding in sequence:
- operation of filling AR1, in which to the adsorber within the period of 30 ÷ 60 s there is supplied oxygen and at the same time the argon fraction is carried away from the adsorber to the buffer tank, the pressure in the adsorber and the buffer tank increases from the pressure 300 ÷ 400 kPa to 500 ÷ 700 kPa,
- operation of filling with pure oxygen AR2, in which to the adsorber within the period of 0 ÷ 15 s, in cocurrent to the gas flow in the operation AR1, there is supplied pure oxygen produced during the desorption operation and next compressed and at the same time the argon fraction if carried away from the adsorber to the buffer tank, the pressure in the adsorber and the buffer tank increases from the pressure 500 ÷ 700 kPa to 600 + 800 kPa,
- operation of rinsing out R, in which to the adsorber 1A or 1B within the period of 10 ÷ 30 s, in cocurrent to the gas flow in the operation AR1, there is supplied pure oxygen produced in the operation of desorption and next compressed, and at the same time the argon fraction is carried away from the adsorber to the buffer tank thereafter the argon fraction is carried away from the buffer tank, while the pressure is kept on a stable level 600 ÷ 800 kPa.
- operation of pressure reduction E1, in which to the adsorber 1A and 1B there is supplied pure oxygen and at the same time from the adsorber within the period of 5 ÷ 20 s, in cocurrent to the gas flow in the operation AR1 gas is carried away and supplied in cocurrent to the second adsorber correspondingly 1B and 1A, in which the operation of pressure increase 1E is run, while the pressure is reduced from 600 ÷ 800 kPa to 400 ÷ 600 kPa, but the pressures between the joined adsorbers do not equalize,
- operation of desorption D, in which from the adsorber within the period 40 ÷ 105 s, in cocurrent to the gas flow in the operation AR1, there is carried away pure oxygen and the pressure in the adsorber is reduced to the pressure 100 ÷ 110 kPa, and in case of oxygen suction by means of a vacuum pump, the pressure is reduced to 10 ÷ 50 kPa,
- operation of pressure elevation 1E, in which to the adsorber 1A or 1B within the period of 5 ÷ 20 s, in cocurrent to the gas flow in the operation AR1, there is supplied gas produced in the operation of pressure reduction E1, and the pressure is increased to 250 ÷ 350 kPa, while the pressures between the joined adsorbers do not equalize,
- operation of reflexive filling RR, in which to the adsorber 1A or 1B within the period 1 ÷ 2 s, in counter-current to the gas flow in the operation AR1, there is supplied argon fraction contained in the buffer tank 2, but the pressure between the adsorber and the buffer tank do not equalize,
It is preferable if:
- the ratio of the volume of the buffer tank 2 to the volume of the molecular carbon or zeolite sieve contained in each adsorber 1A or 1B is within the range 0.4 ÷ 0.7,
- the radio of the quantity of pure oxygen recycled to the process in the operations AR2 and R and E1 to the quantity of oxygen introduced with the raw material is within the range 0.6 ÷ 1.2,
- the ratio of pressure increase in total in the operations AR1 and AR2 to the pressure increase only in the operation AR1 is within the range 1.0 ÷ 2.0,
- the time of the complete PSA cycle is 90 ÷ 240 s, while the ratio of time of the operation AR1 to the total time of the operation AR2 and R is 0.7 ÷ 1.4.

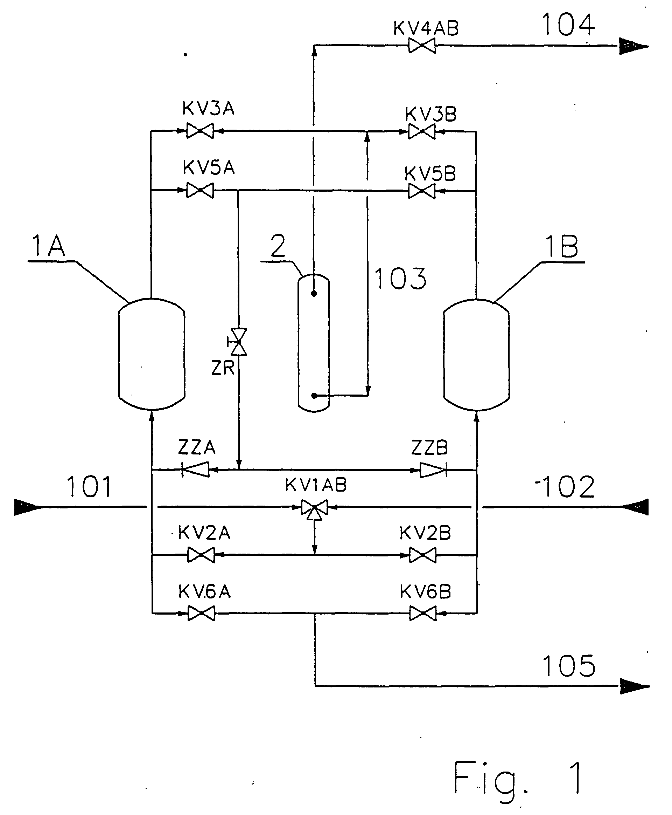

The method for separation of gaseous mixtures of oxygen, argon and nitrogen according to the invention is presented on examples and drawings where fig.1 presents a flowsheet of the installation, fig.2 presents a diagram of gas streams flow in the complete PSA cycle, and fig.3 presents pressure course in the adsorber during the complete cycle.

Separation of gaseous mixtures of oxygen, argon and nitrogen is run in a PSA installation consisting of two adsorbers 1A and 1B filled with molecular carbon or zeolite sieve, selectively adsorbing oxygen from argon and nitrogen, and a buffer tank 2. The process of variable pressure adsorption is run by means of controlled valves marked KV1AB ÷ KV6A, KV6B. The installation includes two reflux valves ZZA and ZZB and a hand valve ZR serving for control of the operation of pressure reduction and elevation. The conduit 101 supplies polluted oxygen, the conduit 102 supplies to the installation pure oxygen produced in the desorption phase and next compressed. The conduit 103 supplies the argon fraction to the buffer tank, the conduit 104 carries argon fraction away from the buffer tank. The conduit 105 carries away from the installation pure oxygen obtained in the operation of desorption, which is next compressed and partially recycled to the process.

The double-way valve KV1AB serves for alternating supply to the adsorbers 1A or 1B polluted oxygen from the conduit 101 in the operation AR1 or pure oxygen from the conduit 102 in the operation AR2, R and E1.

The valves KV2A and KV2B are open and they serve for supplying to the adsorbers, respectively 1A and 1B, polluted oxygen in the operations of filling AR1, and for supplying to the adsorbers 1A, 1B, pure oxygen in the operations of filling with pure oxygen AR2 and rinsing out R and pressure reduction E1. The valves KV3A and KV3B serve for carrying away from the adsorbers 1A and 1B the argon fraction through the conduit 103 to the buffer tank 2 in the operations of filling AR1, filling with pure oxygen AR2, rinsing out R and for carrying the argon fraction from the buffer tank 2 to the adsorbers 1A and 1B during the operation of reflux filling RR. The valve KV4B serves for carrying the argon fraction away from the buffer tank 2 through the conduit 104. The valves, respectively KV5A, ZR, ZZB and KV5B, ZR, ZZA serve for performing mutually correlated operations of pressure reduction E1 and pressure elevation 1E. If the valve KV5A is open, oxygen flows from the adsorber 1A through the valve ZR and the valve ZZB to the adsorber 1B and vice versa, when the valve KV5B is open, oxygen flows from the adsorber 1B through the valve ZR and the valve ZZA to the adsorber 1A. The valves KV6A and KV6B serve for carrying desorbing oxygen away from the installation during desorption D. Oxygen is carried away from the installation through the conduit 105 and next compressed and partially recycled to the process.

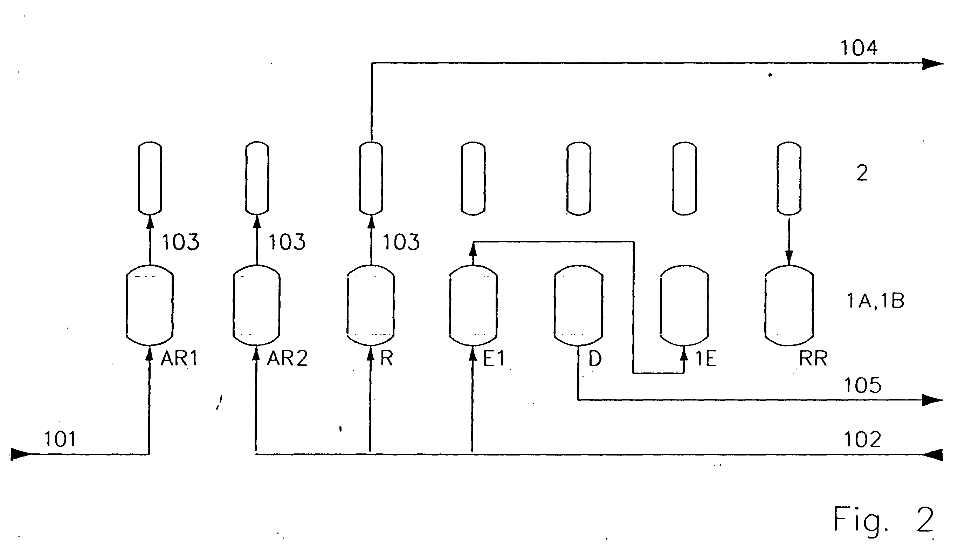

Fig. 2 presents a diagram of gas streams flow during the cycle of variable pressure adsorption PSA. The symbol 1A and 1B denote the adsorbers, the figure 2 denotes the argon fraction buffer tank. Denotations of the several technological operations are as follows:
- operation of filling - AR1
- operation of filling with pure oxygen - AR2
- operation of rinsing out - R
- operation of pressure reduction - E1
- operation of desorption - D
- operation of pressure elevation - 1E
- operation of reflux filling - RR

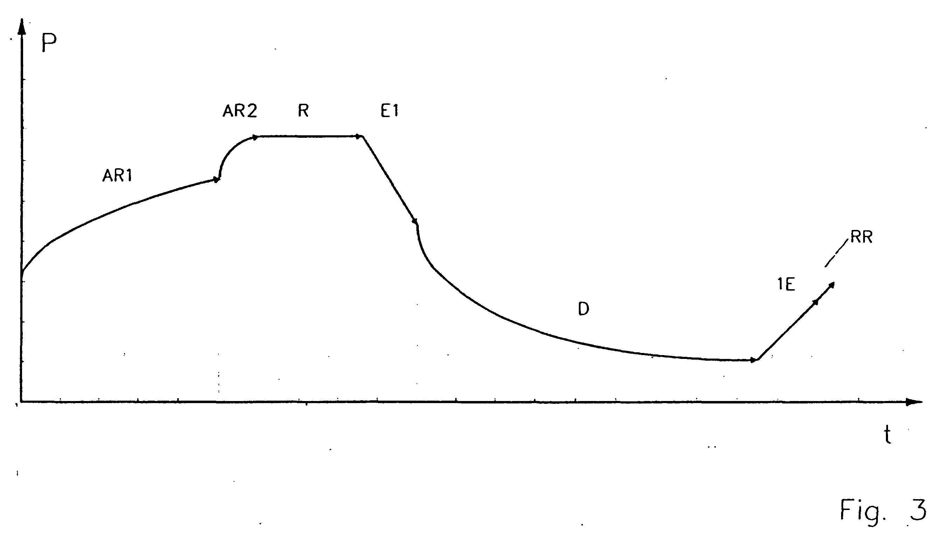

Fig. 3 presents the course of pressure P in a single adsorber during the PSA cycle depending upon the time of the cycle t and several technological operations performed in sequence: AR1, AR2, R, E1, D, 1E and RR.

The process of separation of gaseous mixtures of oxygen, argon and nitrogen by the method of variable pressure adsorption according to this invention proceeds as follows:
- in the operation of filling AR1 - within the time of 30 ÷ 60 s to the adsorber 1A or 1B, by the conduit 101 through the properly set valve KV1AB and the open valve, respectively KV2A or KV2B, there is supplied oxygen polluted with argon and nitrogen, at the same time from the other end of the adsorber through the open valve, respectively KV3A or KV3B, by the conduit 103 there is carried away the argon fraction to the buffer tank 2, in contact with the sorbent, adsorption of oxygen takes place, the gas of the elevated argon content is carried quickly outside the zone of adsorption, due to which argon adsorbs in a reduced degree; the pressure in the adsorber and the buffer tank increases from 300 ÷ 400 kPa to 500 ÷ 700 kPa,
- in the operation of filling with pure oxygen AR2 - within the time of 0 ÷ 15 s to the adsorber 1A or 1B by the conduit 102 through the properly set valve KV1AB and the open valve, respectively KV2A or KV2B, in cocurrent to the gas flow in the operation AR1, there is supplied pure oxygen produced in the operation of desorption D and next compressed, while from the other end of the adsorber 1A or 1B through the open valve, respectively KV3A or KV3B by the conduit 103 there is carried away the argon fraction from the buffer tank 2 and the pressure in the adsorber and in the buffer tank increases from 500 ÷ 700 kPa to 600 ÷ 800 kPa, thereafter adsorbed argon is rinsed out and carried away in the stream of oxygen to the buffer tank 2.
- in the operation of rinsing out R - within the time of 10 ÷ 30 s to the adsorber 1A or 1B by the conduit 102 through the properly set valve KV1AB and the open valve KV2A or KV2B there is supplied pure oxygen produced in the operation of desorption D and next compressed, and from the other end of the adsorber 1A or 1B through the open valve, respectively KV3A or KV3B. by the conduit 103 there is carried away the argon fraction to the buffer tank 2, and at the same time from the buffer tank 2 through the open valve KV4AB by the conduit 104 the argon fraction is carried away outside the installation, the pressure in the adsorber 1A or 1B and in the buffer tank is kept at the stable level 500 ÷ 700 kPa, oxygen being carried away rinses out adsorbed argon and argon being in the free space of the sorbent; argon is carried away in the stream of oxygen in the form of the argon fraction,
- in the operation of pressure reduction E1 within the time of 5 ÷ 20 s to the adsorber 1A or 1B there is supplied pure oxygen through the suitably set valve KV1AB and the open valve, respectively KV2A or KV2B, and from the adsorber 1A or 1B through the open valves, respectively KV5A, ZR, ZZB or KV5B, ZR, ZZA, in cocurrent to the gas flow in the operation AR1 there is carried away desorbing oxygen which rinses out the argon residue and supplied in cocurrent to the gas flow in the operation AR1 to the second adsorber in which there is performed the operation of pressure elevation 1E, the pressure in the adsorber 1A or 1B is reduced from 600 - 800 kPa to 400 - 600 kPa, but the pressure between the joined adsorbers do not equalize, desorbing oxygen with a small content of argon is introduced in total to the second adsorber,
- In the operation of desorption D - within the time 40 ÷ 105 s from the adsorber 1A or 1B through the open valve, respectively KV6A or KV6B, by the conduit 105 there is carried away desorbing pure oxygen, the pressure in the adsorber is reduced to atmospheric and in case of oxygen suction by means of a vacuum pump, it is reduced to 20 ÷ 50 kPa, oxygen is next compressed to the required pressure and it is partially recycled to the process by the conduit 102,
- in the operation of reflux filling RR - within the time 1 ÷ 2 s from the buffer tank 2 through the open valve KV2A or KV2B there is carried away the argon fraction respectively to the adsorber 1A or 1B, the pressure in the adsorber increases to 300 ÷ 400 kPa, the pressures between the adsorbers 1A or 1B and the buffer tank do not equalize.
For appropriate performance of the process of variable pressure adsorption by the method according to the invention it is important to meet several process conditions. The purity of produced oxygen is influenced by:
- the ratio of the volume of the buffer tank 2 to the volume of the molecular carbon or zeolite sieve packed into each of two adsorbers 1A and 1B,
- the ratio of the quantity of pure oxygen recycled to the process in the operations AR2 and R to the content of oxygen contained in the raw material introduced to the installation in the operation AR1,
- the ratio of the increase of pressures in total in the operation AR1 and AR2 to the increase of pressure in the operation AR1,
- the time periods of several technological operations lasting, particularly the ratio of time of AR1 operation lasting to the sum of the time of the operations AR2 and R.
It is favourable for the process of variable pressure adsorption by the method according to the invention to be run after fulfilling the following conditions:
- the radio of the volume of the buffer tank 2 to the volume of the molecular carbon or zeolite sieve packed into each of the adsorbers 1A and 1B should be within the range 0.4 ÷ 0.7, too low ratio of these volumes does no allow to remove the argon fraction effectively from the sorbent zone during the operation AR1, too high ratio causes unfavourable oxygen losses,
- the ratio of pure oxygen recycled to the process in the operations AR2, R and E1 to the content of oxygen introduced with the raw material should be within the range 0.6 - 1.2, too low content of recycled oxygen does not allow to achieve oxygen of high purity, too high content of oxygen causes losses during the operation of rinsing out without considerable improvement of obtained oxygen purity,
- the ratio of total pressures increase in the operation AR1 and AR2 to the pressure in the operation AR1 should be within 1.0 ÷ 2.0, preferably within the range 1.4 ÷ 1.5, too high ratio of the pressures brings about unnecessary energy consumption connected with compressing recycled oxygen, the higher ratio of these pressures is, the stronger is rinsing out of argon adsorbed in the sorbent,
- the time of the whole cycle of variable pressure adsorption run according to the invention should be within the range 90 ÷ 240 s, too short time of the cycle does not allow to use effectively the adsorption volume of the sorbent towards oxygen because of reduced rate of oxygen diffusion in the sorbent, too long time of cycle lasting causes pollution of the sorbent with argon, thus the produced oxygen purity decreases, it is favourable when the ratio of the time of the operation AR1 to the sum of time periods of the operations AR2 and R is with the range 0.7 ÷ 1.4, longer time of contact between the sorbent and high purity oxygen causes better rinsing of argon out of the sorbent.

### Example 1 - Comparative

In the installation including two adsorbers 1A and 1B filled with molecular carbon sieve MSC - 3A of Takeda, 100 kg in each adsorber, and a buffer tank of the volume 0.065 m³, there is run separation of the mixture of oxygen, argon and nitrogen of the following contents: O₂ content - 95% by volume, Ar content - 4.5% by volume, N₂ content - 0.5% by volume. The process is run according to the US patent no. 5.137.549 applying the following parameters of the PSA cycle:
- in the operation of filling the pressure in the adsorber 1A or 1B is elevated from 280 kPa to 550 kPa and polluted oxygen is supplied to the adsorber for the time of 50 s,
- in the operation of adsorption to the adsorber 1A or 1B there is supplied polluted oxygen under the pressure 550 kPa for 35 s and at the other end the argon fraction is received,
- in the operation of cocurrent pressure reduction and rinsing out to the adsorber 1A or 1B for 18 s there is supplied pure oxygen from the operation of desorption, at the same time the pressure is reduced to 450 kPa,
- in the operation of desorption lasting for 85 s from the adsorber 1A or 1B there is carried away pure oxygen which is next compressed and partially recycled to the process,
- in the operation of pressure elevation the pressure is elevated with the oxygen from the operation of cocurrent pressure reduction and rinsing out to the value of 280 kPa.

In the installation there is separated 37.0 m³/hour of polluted oxygen. From the installation there is received 9.2 m³/hour of the argon fraction. In the desorption phase there is received 41.7 m³/hour of pure oxygen. To the process there is recycled 13.9 m³/hour of pure oxygen. In the result from the installation there is obtained 27.8 m³/hour of pure oxygen. Oxygen yield efficiency calculated as the content to the content of oxygen obtained in the product to the content of oxygen introduced with the raw material is 75.0%. In the process there is obtained oxygen of the purity 99.3 ÷ 99.5% by volume measured by means of an analyser with a high-temperature zirconium probe. The values of flow rates correspond to the pressure 101.3 kPa and to the temperature 273°K.

### Example 2

In the installation of Example 1 there is separated polluted oxygen containing 95% by volume of O₂, 4.5% by volume of Ar and 0.5% by volume of N₂ according to the invention. The parameters of the process are presented in Table 1.

**Table 1.**

| Parameters of the PSA process | | | |
|---|---|---|---|
| Operation Symbol | Operation time | Initial pressure | Final pressure |
| | S | kPa | kPa |
| AR1 | 50 | 300 | 550 |
| AR2 | 12 | 550 | 650 |
| R | 25 | 650 | 650 |
| E1 | 15 | 650 | 460 |
| D | 87 | 460 | 105 |
| 1E | 15 | 105 | 270 |
| RR | 1 | 270 | 300 |

In the installation there is separated 36.5 m³/hour of polluted oxygen and carried away 9.5 m³/hour of the argon fraction. During desorption from the installation there is received 52.9 m³/hour of pure oxygen. After compression to the installation there is recycled 25.8 m³/hour of pure oxygen, from the installation there is carried away 27.1 m³/hour of pure oxygen. Oxygen yield efficiency is 78%. In the process there is obtained oxygen of the purity 99.8 - 99.9% by volume of O₂ measured by means of an analyser with a high-temperature zirconium probe.

### Example 3

In the installation as in Examples 1 and 2 there is run separation of a mixture consisting of oxygen and argon of the following composition: O₂ content - 99.5%, argon content - 4.5%. The same parameters as in Example 2 are used. To the installation there is supplied 36.0 m³/hour of polluted oxygen and received 9.5 m³/hour of the argon fraction. During desorption from the installation there is received 53.3 m³/hour of pure oxygen. To the process there is recycled 26.8 m³/hour of pure oxygen and eventually from the installation there is obtained 26.5 m³/hour of pure oxygen. The oxygen yield efficiency is 77.9%. In the process there is obtained oxygen of the purity 99.9 - 100% by volume measured by means of a high-temperature zirconium probe.

## Claims

1. Method for separation of gas mixtures of oxygen, argon and nitrogen by a method of variable-pressure adsorption in kineticly selective PSA process on molecular carbon or zeolite sieves wherein the PSA process is run in an installation including at least two adsorbers (1A) and (1B) and a buffer tank of the argon fraction (2) and the full PSA cycle comprises the following technological operations proceeding in sequence:
- operation of filling (AR1) in which to the adsorber (1A) or (1B) within the time of 30 ÷ 60s there is supplied polluted oxygen and at the same time from the adsorber (1A) or (1B) there is carried away the argon fraction from the buffer tank, while the pressure in the adsorber and the buffer tank increases from 300 ÷ 400 kPa to 500 ÷ 700 kPa.
- operation of filling with pure oxygen (AR2) in which to the adsorber within the time 0 ÷ 15 s in cocurrent to the gas flow in the operation (AR) theres is supplied pure oxygen produced in the operation of desorption and next compressed, while at the same time from the adsorber (1A) or (1B) to the buffer tank (2) there is supplied argon fraction, while the pressure in the adsorber (1A) or (1B) increases from 500 ÷ 700 kPa to 600 ÷ 800 kPa,
- operation of rinsing out (R) in which to the adsorber (1A) or (1B) within the time 10 ÷ 30 s, in cocurrent to the gas flow of the operation (AR1), there is supplied pure oxygen produced in the operation of desorption and next compressed, while at the same time from the adsorber (1A) or (1B) to the buffer tank (2) there is carried away argon fraction and at the same time from the argon fraction is carried away from the buffer tank (2), while the pressure is kept on a stable level of 600 ÷ 800 kPA,
- operation of pressure reduction (E1) in which to the adsorber (1A) or (1B) there is supplied pure oxygen and at the same time from the adsorber (1A) or (1B) within the time of 5 ÷ 20 s, in cocurrent to the gas flow in the operation (AR1) there is carried away gas and supplied in cocurrent to the second adsorber, respectively (1B) or (1A), in which the operation of pressure elevation (1E) is run, while the pressure is reduced from 600 ÷ 800 kPa to 400 ÷ 600 kPa, but the pressures between the adsorbers do not equalize,
- operation of desorption (D) in which from the adsorber within the time of 40 ÷ 105 s, in counter-current to the gas flow in the operation (AR1) there is carried away desorbing pure oxygen and the pressure in the adsorber is reduced to the pressure 100 ÷ 110 kPa, and in case of oxygen suction by means of a vacuum pump, the pressure is reduced to 10 ÷ 50 kPa,
- operation of pressure elevation (1E) in which to the adsorber (1A) or (1B) within the time of 5 ÷ 20 s, in cocurrent to the gas flow in the operation (AR1) there is supplied gas produced in the operation of pressure reduction (E1), and the pressure increases from 250 ÷ 350 kPa but the pressures between the adsorbers do not equalize,
- operation of reflux filling (RR) in which from the adsorber (1A) or (1B) within the time 1 ÷ 2 s, in counter-current to the gas flow in the operation (AR1) there is supplied argon fraction contained in the buffer tank (2) but the pressures between the adsorbers (1A) or (1B) and the buffer tank (2) do not equalize.

2. Method according to Claim 1 wherein the ratio of the volume of the buffer tank (2) to the volume of the molecular carbon or zeolite sieve contained in the adsorber (1A) or (1B) is within the range 0.4 ÷ 0.7.

3. Method according to Claim 1 wherein the ratio of pure oxygen recycled to the process in the operations (AR1) and (R), and (E1) to the content of oxygen introduced with the raw material is with the range 0.6 ÷ 1.2.

4. Method according to Claim 1 wherein the ratio of the pressure increase in total in the operations (AR1) and (AR2) to the pressure increase only in the operation (AR1) is with the range 1.0 ÷ 2.0.

5. Method according to Claim 1 wherein the lasting time of the full PSA cycle is 90 ÷ 240 s, while the ratio of the lasting time of the operation (AR1) to the sum of the lasting time of the operation (AR1) and (R) is 0.7 ÷ 1.4.
